# FASCICULE DE BREVET EUROPEEN

(11) **EP 1 428 763 B1**
(45) Date de publication et mention de la délivrance du brevet: **12.09.2007**
(21) Numéro de dépôt: 03292816.0
(22) Date de dépôt: 13.11.2003
(51) Int. Cl.: B65D 19/02

(54) **Chariot de transport de marchandises comportant au moins un volet anti chute**
Transportwagen mit mindestens einer Abdeckung gegen das Herabfallen des Transportgutes
Pallet with at least one cover for protecting goods from falling

(30) Priorité: 09.12.2002 FR 0215523; 05.03.2003 FR 0302695
(43) Date de publication de la demande: 16.06.2004
(73) Titulaire: Touraine Emballage Recyclage, 37520 La Riche (FR)
(72) Inventeur: Cherbonnier, Yvon, 37540 Saint-Cyr-sur-Loire (FR)
(74) Mandataire: Texier, Christian

(56) Documents cités:
- EP-A- 0 376 857
- FR-A- 2 112 008
- US-A- 6 036 219

## Description

La présente invention concerne le domaine des chariots destinés au stockage, au déplacement et à la livraison de marchandises ou produits divers selon le préambule de la revendication 1.

La présente invention s'applique, notamment mais non exclusivement aux chariots destinés à la livraison de produits ou marchandises dans les magasins, y compris les moyennes et grandes surfaces.

FR 2112088 décrit un chariot selon le préambule de la revendication 1. Il décrit deux modes de réalisation principaux. L'un comprend deux éléments en U. Chacun de ces éléments comporte un panneau médian positionné sur le plancher ou le plafond d'un chariot. Par ailleurs, chacun des deux éléments comporte deux panneaux latéraux articulés autour d'un axe horizontal sur le panneau médian précité. Le second mode de réalisation est composé d'un seul élément comprenant 6 matelas calorifuges articulés entre eux. L'enveloppe possède des oeillets qui reçoivent des lanières extensibles liées aux ridelles.

L'enseignement de NL 7004925 est très sensiblement identique à FR 2112008.

US 6036219 décrit une enveloppe en forme de boucle horizontale qui entoure un chariot. L'enveloppe est fixée pour une part sur l'embase du chariot, d'autre part sur un support horizontal adapté pour coulisser verticalement sur les montants.

EP 0376857 décrit une housse dont la face destinée à venir en regard de la face ouverte d'un conteneur est articulé sur le haut de la housse.

JP 11048981 décrit des volets de protection fixés à l'aide de clips en matière plastique à la fois sur les traverses horizontales et les montants de ridelles d'un conteneur.

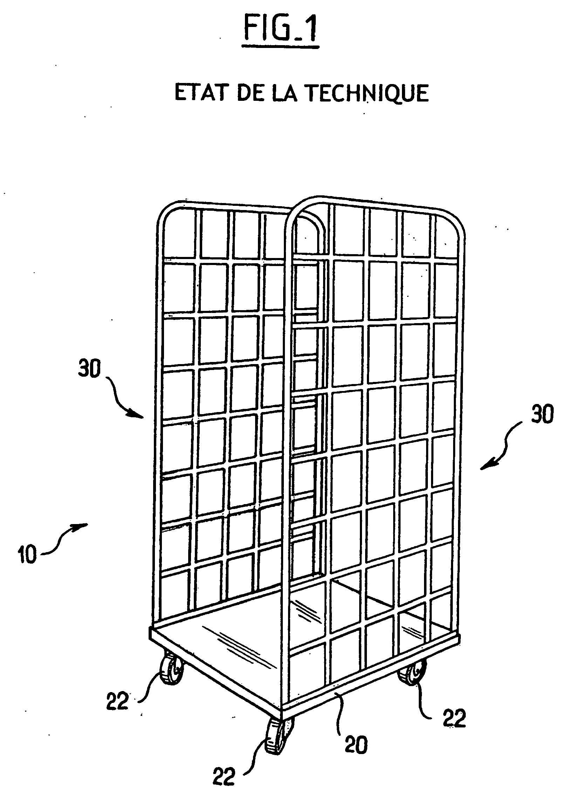

On a représenté sur la figure 1 annexée un chariot connu conforme à l'état de la technique.

On aperçoit sur cette figure 1 un chariot 10 comprenant une embase 20 montée sur quatre roulettes 22 et recevant, de préférence de manière amovible, deux ridelles 30 en claire-voie, formées chacune avantageusement d'une grille métallique comportant des montants verticaux et des traverses horizontales soudées entre elles. Des plateaux horizontaux formés également d'un treillis métalliques peuvent être accrochés entre les ridelles 30. Ceux-ci ne sont pas représentés sur la figure 1 pour simplifier l'illustration.

La structure générale d'un tel chariot est bien connue de l'homme de l'art et ne sera donc pas décrite plus en détail par la suite.

Ces chariots connus ont déjà rendu de grands services et donnent lieu aujourd'hui à une très large utilisation.

Cependant ils présentent l'inconvénient suivant.

Pour maintenir correctement les produits ou marchandises sur le chariot, entre les ridelles 30, les usagers utilisent de nos jours du film étirable enroulé en multicouches autour du chariot, une fois celui-ci chargé.

Un tel film étirable n'étant pas réutilisable, cette pratique s'avère relativement onéreuse. Par ailleurs elle laisse à désirer sur le plan de l'écologie.

La présente invention a maintenant pour but de proposer de nouveaux moyens permettant de supprimer l'inconvénient précité.

Ce but est atteint dans le cadre de la présente invention grâce à un chariot de stockage de marchandises tel que défini en revendication 1 annexée.

La présente invention concerne également les volets anti-chutes en eux-mêmes.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 précédemment décrite représente schématiquement une vue en perspective d'un chariot connu conforme à l'état de la technique,
- la figure 2 représente une vue similaire d'un chariot conforme à la présente invention,
- la figure 3 représente une vue de détail de ce chariot conforme à la présente invention,
- la figure 4 représente une seconde vue en perspective du chariot conforme à la présente invention,
- la figure 5 représente schématiquement une vue en coupe horizontale du chariot conforme à la présente invention pour illustrer les moyens d'accrochage du volet anti-chute,
- la figure 6 représente schématiquement une vue de détail de l'extrémité d'une sangle conforme à une variante de la présente invention,
- la figure 7 représente une vue latérale d'un chariot conforme à une variante de réalisation de la présente invention,
- la figure 8 représente une vue en plan d'un volet conforme à une variante de la présente invention, et
- la figure 9 représente une vue en plan d'un volet conforme à une autre variante de réalisation de la présente invention.

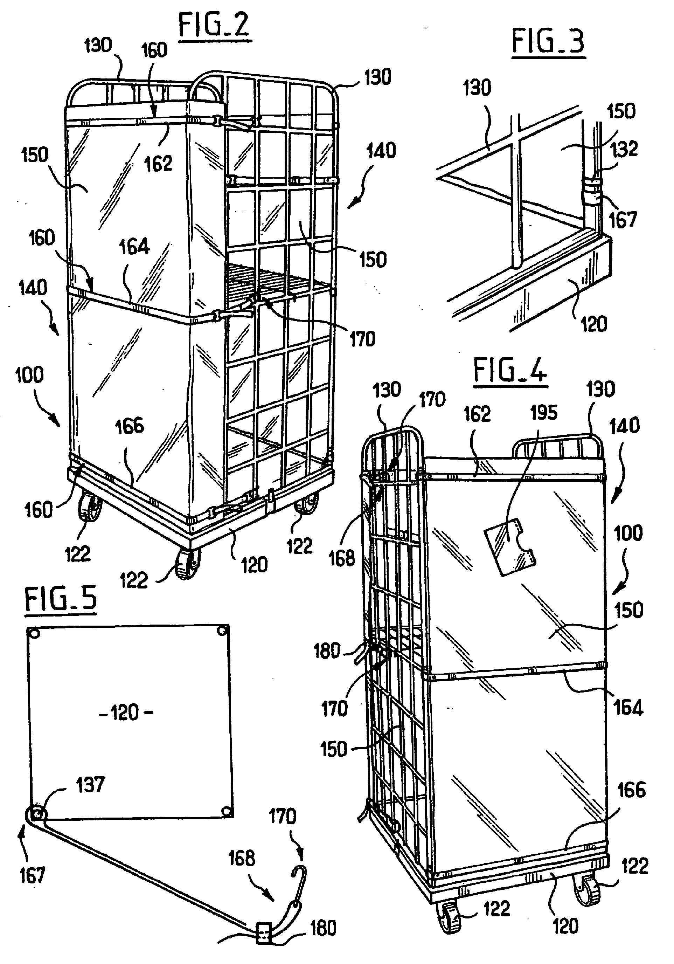

On va tout d'abord décrire le chariot et le volet anti-chute conformes à la présente invention, illustrés sur les figures 2 à 5 annexées.

La structure de base du chariot 100 conforme à la présente invention illustré sur les figures 2 à 5 et formé par la combinaison d'une embase 120 munie de roulettes 122, et de deux ridelles 130, est classique en soit et ne sera pas décrite plus en détail par la suite.

Le chariot conforme à la présente invention illustré sur les figures annexées comprend deux volets anti-chutes 140, identiques entre eux. Les deux volets 140 sont conçus pour recouvrir respectivement les deux côtés du chariot définis entre les ridelles 130.

Chaque volet 140 est formé par la combinaison d'une paroi ou feuille souple 150 et de plusieurs sangles horizontales 160. De préférence chaque volet 140 comprend trois sangles 160.

A titre d'exemple non limitatif, la paroi souple 150 peut être formée à base de matière plastique, par exemple à base de polyéthylène (voire éventuellement de toute autre matériau plastique approprié). Il s'agit avantageusement d'une trame en matière plastique munie d'un revêtement de même nature.

Les sangles 160 sont réalisées en un matériau non élastique. Elles peuvent être également réalisées de préférence à base de matière plastique, par exemple en polypropylène. Elles sont fixées horizontalement sur la paroi 150, de préférence par couture, sur toute la longueur des sangles en contact avec la paroi 150.

Il est ainsi prévu de préférence trois sangles horizontales 160 : une sangle supérieure 162 située au voisinage du bord horizontal supérieur de la paroi 150, une sangle médiane 164 située de préférence sensiblement à mi hauteur de la paroi 150, et une sangle inférieure 166 située de préférence sur le bord inférieur de la paroi 150. La demanderesse a en effet constaté qu'il était avantageux de prévoir la sangle inférieure sur le bord inférieur de la paroi 150 pour assurer une bonne tenue de cette dernière à ce niveau et éviter la chute possible de petits objets stockés sur l'embase 120.

Les sangles 160 sont adaptés pour résister à des efforts de 300 à 500 Kg.

Les sangles 160 sont munies à leurs extrémités de moyens de fixation sur les montants des ridelles 130.

Le cas échéant on peut prévoir des moyens de fixation sur les sangles permettant une totale amovibilité par rapport au chariot, c'est-à-dire permettant de retirer complètement les sangles 160 et la paroi 150 liée à celles-ci.

Cependant de préférence les sangles 160 sont fixées à demeure par l'une première de leurs extrémités, sur l'un des montants latéraux des ridelles 130. L'autre extrémité des sangles 160 est équipée d'un crochet 170 adapté pour être accroché sur un montant choisi de la ridelle opposée 130.

Plus précisément encore, de préférence, la première extrémité 167 de chaque sangle 160 est retournée sur elle-même en boucle, autour d'un montant latéral 137 d'une ridelle 130, et fixée dans cet état, par couture, par rivet, par oeillet ou tout autre moyen équivalent apte à résister aux efforts susceptibles d'être appliqués lors d'une manipulation, comme on l'a schématisé sur la figure 5.

Par ailleurs comme on l'a également schématisé sur la figure 5, la seconde extrémité 168 de chaque sangle 160 est de préférence également retournée en boucle sur elle-même, engagée de manière coulissante sur un passant du crochet 170 et en prise avec un moyen, schématisé en 180, permettant de régler la longueur de la boucle ainsi formée et par conséquent de régler la longueur de la sangle 160 pour permettre une bonne tenue du crochet 170 et de la paroi 150.

De tels moyens 180 permettant un réglage en longueur de sangle et un blocage à la longueur choisie, avec possibilité de modifications multiples ultérieures sont bien connus de l'homme de l'art et ne seront donc pas décrits dans le détail par la suite. On rappelle simplement que la plupart de ces dispositifs comprennent un corps comportant un ou plusieurs passants destinés à recevoir la sangle et des moyens de blocage mobiles sollicités contre la sangle, en position de travail, pour immobiliser celle-ci, par des moyens élastiques ou par la sangle elle-même.

Les boucles prévues sur les premières extrémités 162 des sangles 160 et entourant un montant d'une ridelle 130 sont positionnées pour maintenir la paroi 150 en tension. A cette fin par exemple, la boucle supérieure est placée au dessus de l'avant dernière traverse supérieure horizontale de la ridelle, la boucle médiane est placée sous une traverse horizontale de celle-ci, comme on le voit sur les figures 2 et 4, et la boucle inférieure peut être placée entre la dernière traverse horizontale de la ridelle et une saillie 132 rapportée sur le montant de la ridelle, au dessus de cette traverse, comme on le voit sur la figure 3. Une telle saillie 132 peut être formée d'un élément métallique soudé ou de tout moyen équivalent.

Les deux volets 140 peuvent présenter une symétrie par rapport à l'axe central vertical du chariot, c'est-à-dire que les deux volets 140 sont accrochés à demeure par les premières extrémités respectives de leurs sangles 160 respectivement l'un sur une première ridelle 130, l'autre sur la seconde ridelle 130, ou en d'autres termes respectivement sur deux montants en diagonale.

En variante, les deux volets 140 peuvent présenter une symétrie par rapport à un plan médian du chariot, c'est-à-dire que les deux volets 140 sont accrochés à demeure respectivement sur les deux montants d'une même ridelle 130.

Comme on le voit sur la figure 2, de préférence la largeur horizontale de chaque paroi 150 est supérieure à l'écart existant entre les deux ridelles 130. Ainsi chaque paroi 150 recouvre en partie, par sa seconde extrémité, la ridelle recevant les crochets 170 associés. Cette disposition permet de limiter le risque de chute d'objets.

Bien entendu la présente invention n'est pas limitée aux modes de réalisation particuliers qui viennent d'être décrits, mais s'étend à toutes variantes conformes à son esprit.

Chaque crochet 170 ou l'un au moins des crochets 170 de chaque volet 140, peut être muni d'un moyen de verrouillage interdisant son retrait intempestif, voire même adapté pour interdire son retrait par toute personne non autorisée, c'est-à-dire toute personne ne disposant pas d'un outil spécifique adéquat ou un code.

Comme on l'a schématisé en 195 sur la figure 4, la paroi 150 de l'un au moins des volets 140 peut être munie d'un porte étiquettes ou équivalents afin de faciliter l'identification des produits contenus dans le chariot.

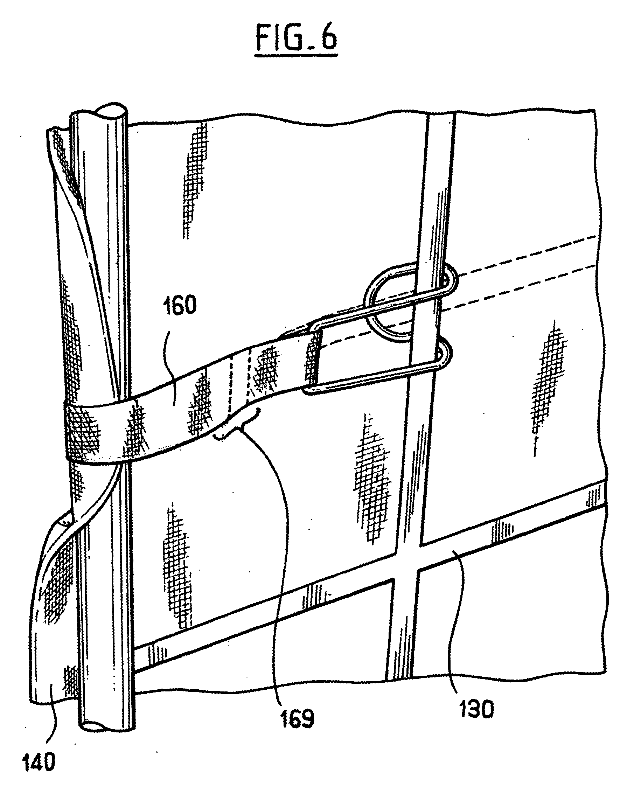

On va maintenant décrire une autre caractéristique avantageuse de la présente invention en regard de la figure 6 annexée.

Comme indiqué précédemment, la sangle 160 est réalisée essentiellement en un matériau non élastique.

Cependant, selon le perfectionnement illustré sur la figure 6, chaque sangle 160 comprend un tronçon 169 présentant une caractéristique élastique contrôlée. Ce tronçon 169 peut être formé en un matériau élastique intercalé en série entre deux brins de la sangle 160 ou en variante, le tronçon élastique 169 peut être réalisé par un surpiquage approprié à l'aide d'un fil élastique, ou d'un tronçon élastique en parallèle d'un tronçon non élastique de la sangle, de plus grande longueur que ledit tronçon élastique, selon toute technique connue de l'homme de l'art, sur un brin initialement non élastique de la sangle 160.

Plus précisément encore, la longueur et les propriétés élastiques du tronçon 169 sont adaptées pour permettre au crochet 170 de franchir l'un des éléments verticaux de la ridelle 130 une fois le réglage de longueur de la sangle réalisée. Dans ce contexte, le tronçon 169 est de préférence adapté pour autoriser à l'état tendu une élongation possible de la sangle comprise entre 0,5cm et 5cm, très préférentiellement entre 1 cm et 2cm.

L'homme de l'art comprendra que du fait de l'élasticité limitée du tronçon 169 une fois le crochet 170 mis en place, la sangle 160 reprend essentiellement ses caractéristiques non élastiques.

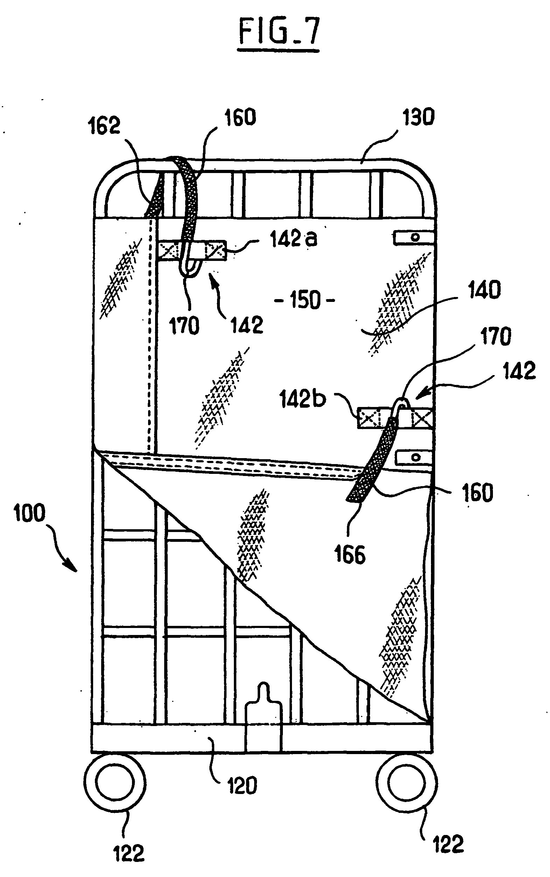

On a illustré sur la figure 7 annexée, une variante de réalisation selon laquelle chaque volet anti-chute 140 est muni d'au moins un passant 142 ou d'un moyen équivalent adapté pour recevoir, en attente, l'un des crochets précités 170. De préférence, ces passants sont utilisés lorsque le chariot est vide, le volet anti-chute 140 étant alors rabattu contre une ridelle 130. Cette disposition peut être utilisée pour faciliter par exemple l'empilement de ridelles sur un chariot commun vide de marchandises pour limiter l'encombrement des chariots vides lors de leur stockage ou transport. Les passants 142 permettent de localiser précisément les sangles et crochets 170 associés et ainsi de faciliter leur manipulation ultérieure. Ils permettent également d'éviter que les sangles 160 ne traînent par terre.

Les passants 142 peuvent faire l'objet de nombreux modes de réalisation.

Ils peuvent être formés par exemple par couture ou fixation par tous moyens équivalents, par ses deux extrémités, sur un volet 140, d'une bande de matériau adapté de quelques cm de longueur.

Selon le mode de réalisation préférentiel illustré sur la figure 7, il est ainsi prévu un premier passant 142a en partie supérieure du volet 140, destiné à recevoir le crochet 170 associé à la sangle supérieure, et un second passant 142b sensiblement à mi-hauteur du volet 140, destiné à recevoir le crochet 170 associé à la sangle inférieure, l'un des coins du volet étant replié vers le haut comme illustré figure 7.

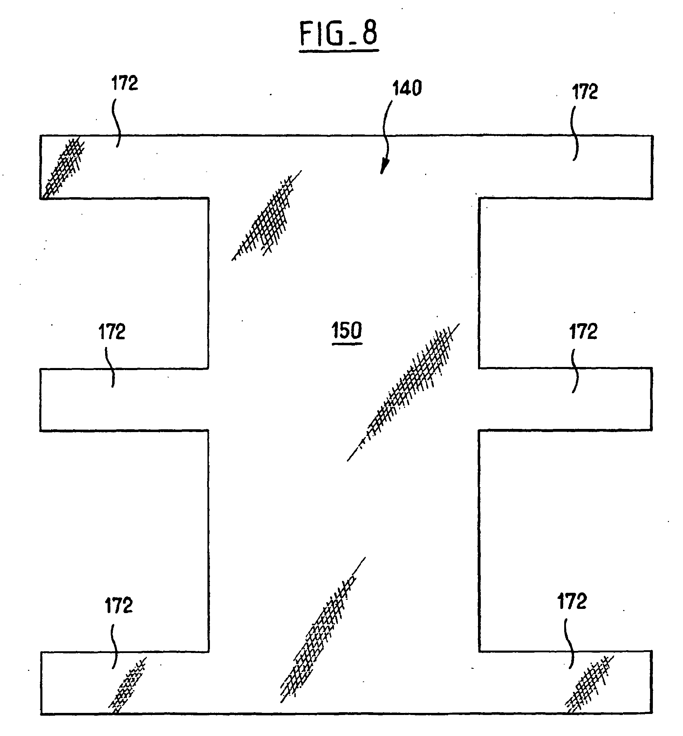

On a illustré sur la figure 8, une variante de réalisation selon laquelle chaque volet 140 de géométrie rectangulaire est muni sur ses arêtes verticales d'excroissances 172, par exemple de trois excroissances 172 sur chaque arête verticale.

De préférence, les excroissances 172 prévues sur une arête verticale sont destinées à être retournées sur elles-mêmes en boucle autour d'un montant latéral 137 d'une ridelle 130 et fixée dans cet état par couture, par rivet, par oeillet ou par tout moyen équivalent, pour fixer le volet à demeure sur une ridelle, tandis que les excroissances 172 prévues sur la seconde arête verticale sont munies de moyens de fixation amovible, par exemple de type ruban auto-agrippant, avantageusement du genre velours/crochet, pour permettre une fixation amovible de ce côté du volet sur la ridelle.

En variante, les excroissances 172 prévues sur les deux côtés des volets 140 peuvent être munies de tels moyens de fixation amovible avantageusement de type ruban auto-agrippant.

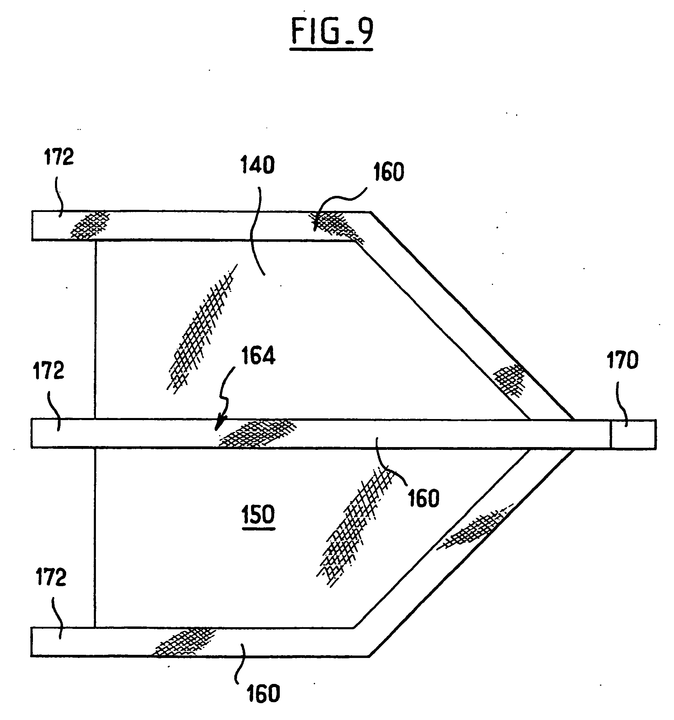

Enfin, on a illustré sur la figure 9, une variante de réalisation selon laquelle chaque volet 140 est muni d'une sangle horizontale 164 à mi-hauteur équipée d'un crochet 170. Chaque volet comporte un panneau principal de contour rectangulaire dont les dimensions sont adaptées pour recouvrir l'espace entre deux ridelles, prolongé par un panneau auxiliaire de contour en triangle isocèle dont le sommet coïncide avec l'extrémité de la sangle 164 équipée du crochet 170. Les bords horizontaux supérieur et inférieur du panneau principal et les bords extérieurs du panneau auxiliaire sont de préférence ceinturés par des sangles de renfort 160.

Avantageusement l'une des extrémités de ces sangles est fixée à demeure, en boucle sur une ridelle, comme indiqué précédemment.

## Revendications

1. Chariot de stockage de marchandises comprenant une embase (120) et au moins deux ridelles verticales (130) montées sur celle-ci, le chariot comprenant en outre des moyens formant volet anti-chute (140) formés d'une feuille souple (150) de dimensions adaptées pour recouvrir au moins un côté du chariot défini entre les deux ridelles (130) et au moins deux sangles (160) horizontales propres à permettre la fixation des moyens formant volet anti-chute sur les ridelles du chariot, les moyens formant volet anti-chute étant constitués de deux volets anti-chute symétriques adaptés pour recouvrir un côté respectif du chariot défini entre les deux ridelles, **caractérisé par** les faits, que au moins deux sangles horizontales sont fixées sur chaque volet anti-chute et que chaque sangle est équipée sur une première extrémité de moyens (167) propres à permettre la fixation du volet respectivement associé sur un montant d'une première ridelle et sur sa seconde extrémité de moyens (170) permettant une fixation amovible dudit volet respectivement associé sur un montant de la ridelle opposée.

2. Chariot selon la revendication 1, **caractérisé par le fait que** les sangles sont non élastiques.

3. Chariot selon l'une des revendications 1 à 2, **caractérisé par le fait qu'**il comprend deux volets (140) présentant une symétrie par rapport à l'axe central vertical du chariot.

4. Chariot selon l'une des revendications 1 à 2, **caractérisé par le fait qu'**il comprend deux volets (140) présentant une symétrie par rapport à un plan médian du chariot.

5. Chariot selon l'une des revendications 1 à 4, **caractérisé par le fait que** chaque volet (140) est accroché à demeure sur un montant (137) d'une ridelle (130).

6. Chariot selon l'une des revendications 1 à 4, **caractérisé par le fait que** chaque volet (140) est monté de manière amovible sur un montant (137) d'une ridelle (130).

7. Chariot selon l'une des revendications 1 à 6, **caractérisé par le fait que** chaque volet (140) comprend trois sangles (160).

8. Chariot selon l'une des revendications 1 à 7, **caractérisé par le fait que** chaque volet (140) comprend une sangle supérieure (162) située au voisinage du bord horizontal supérieur de la feuille (150), une sangle médiane (164) située de préférence sensiblement à mi hauteur de la feuille (150), et une sangle inférieure (166) située sur le bord inférieur de la feuille (150).

9. Chariot selon l'une des revendications 1 à 8, **caractérisé par le fait que** la feuille (150) est formée à base de matière plastique.

10. Chariot selon l'une des revendications 1 à 9, **caractérisé par le fait que** la feuille (150) est formée à base de polyéthylène.

11. Chariot selon l'une des revendications 1 à 10, **caractérisé par le fait que** chaque sangle (160) est réalisée en un matériau à base de matière plastique.

12. Chariot selon l'une des revendications 1 à 11, **caractérisé par le fait que** chaque sangle (160) est réalisée en en polypropylène.

13. Chariot selon l'une des revendications 1 à 12, **caractérisé par le fait que** chaque sangle (160) est cousue sur la feuille (150).

14. Chariot selon l'une des revendications 1 à 13, **caractérisé par le fait qu'**une extrémité (162) de chaque sangle (160) est retournée sur elle-même en boucle, autour d'un montant latéral d'une ridelle (130), et fixée dans cet état.

15. Chariot selon l'une des revendications 1 à 14, **caractérisé par le fait qu'**une extrémité (162) de chaque sangle (160) est équipée d'un crochet (170) adapté pour être accroché sur un montant choisi d'une ridelle (130).

16. Chariot selon l'une des revendications 1 à 15, **caractérisé par le fait qu'**une extrémité (162) de chaque sangle (160) est équipée d'un crochet (170) adapté pour être accroché sur un montant choisi d'une ridelle (130) et muni d'un moyen de verrouillage.

17. Chariot selon l'une des revendications 1 à 16, **caractérisé par le fait que** chaque sangle (160) est équipée d'un moyen (180) de réglage en longueur.

18. Chariot selon l'une des revendications 1 à 17, **caractérisé par le fait que** la largeur horizontale de chaque paroi (150) est supérieure à l'écart existant entre deux ridelles (130) du chariot.

19. Chariot selon l'une des revendications 1 à 18, **caractérisé par le fait qu'**un volet (150) est muni d'un porte étiquettes.

20. Chariot selon l'une des revendications 1 à 19, **caractérisé par le fait que** chaque sangle (160) comprend un tronçon (169) à caractéristique élastique contrôlée.

21. Chariot selon la revendication 20, **caractérisé par le fait que** le tronçon (169) à caractéristique élastique contrôlée est placé à proximité d'un crochet (170).

22. Chariot selon l'une des revendications 20 ou 21, **caractérisé par le fait que** le tronçon (169) à caractéristique élastique contrôlée est formé d'un tronçon élastique intercalé en série entre deux tronçons rigides de chaque sangle (160).

23. Chariot selon l'une des revendications 20 à 22, **caractérisé par le fait que** le tronçon à caractéristique élastique est formé par surpiquage sur un brin d'une sangle en matériau rigide.

24. Chariot selon l'une des revendications 20 à 23, **caractérisé par le fait que** le tronçon (169) à caractéristique élastique est adapté pour permettre une élongation comprise entre 0,5cm et 5cm.

25. Chariot selon l'une des revendications 20 à 24, **caractérisé par le fait que** le tronçon à caractéristique élastique (169) est adapté pour permettre une élongation comprise entre 1 et 2cm.

26. Chariot selon l'une des revendications 20 à 25, **caractérisé par le fait que** chaque volet anti-chute (140) comprend au moins un passant ou équivalent (142) destiné à recevoir un crochet de fixation, de manière temporaire.

27. Chariot selon la revendication 26, **caractérisé par le fait que** chaque volet anti-chute (140) possède deux passants ou équivalents (142).

28. Chariot selon l'une des revendications 26 ou 27, **caractérisé par le fait que** chaque volet anti-chute (140) comporte un passant (142a) en partie supérieure et un passant (142b) sensiblement mi-hauteur.

29. Chariot selon l'une des revendications 1 à 28, **caractérisé par le fait que** chaque volet (140) a un contour général rectangulaire muni d'excroissances (172) sur ses arêtes verticales.

30. Chariot selon la revendication 29, **caractérisé par le fait que** les excroissances (172) prévues sur l'un au moins des côtés du volet sont adaptées pour une fixation à demeure.

31. Chariot selon l'une des revendications 29 ou 30, **caractérisé par le fait que** les excroissances (172) prévues sur l'un au moins des côtés du volet sont adaptées pour une fixation amovible.

32. Chariot selon la revendication 31, **caractérisé par le fait que** les moyens de fixation amovible comprennent des moyens de fixation du type ruban auto-agrippant, par exemple velours/crochet.

33. Chariot selon l'une des revendications 1 à 32, **caractérisé par le fait que** chaque volet (140) est muni d'une sangle unique équipée d'un crochet (170).

34. Chariot selon la revendication 33, **caractérisé par le fait que** la sangle (140) est prévue à mi-hauteur de la feuille souple constituant le volet.

35. Volet conforme aux moyens définis dans l'une quelconque des revendications 1 à 34, formé d'une feuille souple (150) de dimensions adaptées pour recouvrir au moins un côté de chariot défini entre deux ridelles (130) et comportant fixé sur lui même au moins deux sangles horizontales (160) équipées sur une première extrémité de moyens (167) propres à permettre la fixation du volet sur un montant d'une première ridelle et sur leur seconde extrémité de moyens (170) permettant une fixation amovible dudit volet sur un montant de la ridelle opposée.

## Claims

1. Pallet for storing goods, comprising a base (120) and at least two vertical sidewalls (130) mounted thereon, the pallet further comprising means forming panels (140) presenting items from falling off, these being formed of a flexible sheet (150) of dimensions designed to cover at least one side of the pallet defined between the two sidewalls (130) and at least two horizontal straps (160) able to allow the means forming panels to prevent items from falling off to be attached to the sidewalls of the pallet, the means forming panels to prevent items from falling off consisting of two symmetric fall-preventing panels each designed to cover a respective side of the pallet defined between the two sidewalls, **characterized in that** at least two horizontal straps are attached to each fall-preventing panel and that each strap is equipped, at a first end, with means (167) able to allow the respectively associated panel to be attached to an upright of a first sidewall and, at its second end, with means (170) allowing the said respectively associated panel to be attached removably to an upright of the opposite sidewall.

2. Pallet according to Claim 1, **characterized in that** the straps are inelastic.

3. Pallet according to one of Claims 1 to 2, **characterized in that** it comprises two panels (140) exhibiting symmetry with respect to the vertical central axis of the pallet.

4. Pallet according to one of Claims 1 to 2, **characterized in that** it comprises two panels (140) exhibiting symmetry with respect to a mid-plane of the pallet.

5. Pallet according to one of Claims 1 to 4, **characterized in that** each panel (140) is permanently attached to one upright (137) of a sidewall (130).

6. Pallet according to one of Claims 1 to 4, **characterized in that** each panel (140) is mounted removably on an upright (137) of a sidewall (130).

7. Pallet according to one of Claims 1 to 6, **characterized in that** each panel (140) comprises three straps (160).

8. Pallet according to one of Claims 1 to 7, **characterized in that** each panel (140) comprises an upper strap (162) situated near the horizontal upper edge of the sheet (150), a middle strap (164) preferably situated substantially mid-way up the sheet (150), and a lower strap (166) situated on the lower edge of the sheet (150).

9. Pallet according to one of Claims 1 to 8, **characterized in that** the sheet (150) is plastic-based.

10. Pallet according to one of Claims 1 to 9, **characterized in that** the sheet (150) is polyethylene-based.

11. Pallet according to one of Claims 1 to 10, **characterized in that** each strap (160) is made of a plastic-based material.

12. Pallet according to one of Claims 1 to 11, **characterized in that** each strap (160) is made of polypropylene.

13. Pallet according to one of Claims 1 to 12, **characterized in that** each strap (160) is stitched to the sheet (150).

14. Pallet according to one of Claims 1 to 13, **characterized in that** one end (162) of each strap (160) is looped back on itself around a lateral upright of a sidewall (130), and fixed in this state.

15. Pallet according to one of Claims 1 to 14, **characterized in that** one end (162) of each strap (160) is equipped with a hook (170) designed to be hooked onto a chosen upright of a sidewall (130).

16. Pallet according to one of Claims 1 to 15, **characterized in that** one end (162) of each strap (160) is equipped with a hook (170) designed to be hooked onto a chosen upright of a sidewall (130) and equipped with a locking means.

17. Pallet according to one of Claims 1 to 16, **characterized in that** each strap (160) is equipped with a length-adjusting means (180).

18. Pallet according to one of Claims 1 to 17, **characterized in that** the horizontal width of each wall (150) exceeds the separation between two sidewalls (130) of the pallet.

19. Pallet according to one of Claims 1 to 18, **characterized in that** one panel (150) is equipped with a label holder.

20. Pallet according to one of Claims 1 to 19, **characterized in that** each strap (160) comprises a portion (169) with a controlled elastic nature.

21. Pallet according to Claim 20, **characterized in that** the portion (169) of controlled elastic nature is situated near a hook (170).

22. Pallet according to one of Claims 20 or 21, **characterized in that** the portion (169) of controlled elastic nature is formed of an elastic portion interposed in series between two rigid portions of each strap (160).

23. Pallet according to one of Claims 20 or 22, **characterized in that** the portion of elastic nature is formed by topstitching onto a length of strap made of rigid material.

24. Pallet according to one of Claims 20 or 23, **characterized in that** the portion (169) of elastic nature is designed to allow an elongation of between 0.5 cm and 5 cm.

25. Pallet according to one of Claims 20 or 24, **characterized in that** the portion (169) of elastic nature is designed to allow an elongation of between 1 cm and 2 cm.

26. Pallet according to one of Claims 20 or 25, **characterized in that** each fall-preventing panel (140) comprises at least one keeper (142) or equivalent intended to accept a securing hook, temporarily.

27. Pallet according to Claim 26, **characterized in that** each fall-preventing panel (140) has two keepers (142) or equivalent.

28. Pallet according to one of Claims 26 and 27, **characterized in that** each fall-preventing panel (140) comprises one keeper (142a) at the top and one keeper (142b) more or less mid-way up.

29. Pallet according to one of Claims 1 to 28, **characterized in that** each panel (140) has a rectangular overall outline with protrusions (172) on its vertical edges.

30. Pallet according to Claim 29, **characterized in that** the protrusions (172) provided on at least one of the sides of the panel are designed for permanent fixing.

31. Pallet according to one of Claims 29 or 30, **characterized in that** the protrusions (172) provided on at least one of the sides of the panel are designed for removable attachment.

32. Pallet according to Claim 31, **characterized in that** the removable attachment means comprise attachment means of the touch-and-close tape type, for example velours/hooks.

33. Pallet according to one of Claims 1 to 32, **characterized in that** each panel (140) is equipped with a single strap fitted with a hook (170).

34. Pallet according to Claim 33, **characterized in that** the strap (140) is provided mid-way up the flexible sheet that constitutes the panel.

35. Panel according to the means defined in any one of Claims 1 to 34, formed of a flexible sheet (150) of dimensions designed to cover at least one side of a pallet defined between two sidewalls (130) and comprising, fixed to itself, at least two horizontal straps (160) equipped at a first end with means (167) able to allow the panel to be attached to an upright of a first sidewall and at their second end with means (170) allowing the said panel to be secured removably to an upright of the opposite sidewall.

## Patentansprüche

1. Wagen zur Lagerung von Gütern, der ein Basisteil (120) und wenigstens zwei auf diesem angebrachte vertikale Seitenwände (130) umfaßt, wobei der Wagen außerdem folgendes umfaßt: eine Abdeckung gegen das Herausfallen bildende Mittel (140), die aus einer biegsamen Folie (150) gebildet sind, mit Abmessungen, die eingerichtet sind, um wenigstens eine zwischen den beiden Seitenwänden (130) definierte Seite des Wagens abzudecken, und wenigstens zwei horizontale Gurte (160), die dafür geeignet sind, die Befestigung von den eine Abdeckung gegen das Herausfallen bildenden Mitteln an den Seitenwänden des Wagens zu gestatten, die eine Abdeckung gegen das Herausfallen bildenden Mittel aus zwei symmetrischen Abdeckungen gegen das Herausfallen bestehen, die dafür eingerichtet sind, eine jeweilige zwischen den Seitenwänden definierte Seite des Wagens abzudecken, **dadurch gekennzeichnet daß** wenigstens zwei horizontale Gurte an jeder Abdeckung gegen das Herausfallen befestigt sind und daß jeder Gurt an einem ersten Ende mit Mitteln (167) ausgestattet ist, die dafür geeignet sind, die Befestigung der jeweiligen zugehörigen Abdeckung an einem Pfosten einer ersten Seitenwand zu gestatten, und an seinem zweiten Ende mit Mitteln (170) ausgestattet ist, die eine abnehmbare Befestigung der jeweiligen zugehörigen Abdeckung an einem Pfosten der gegenüberliegenden Seitenwand gestatten.

2. Wagen nach Anspruch 1, **dadurch gekennzeichnet, daß** die Gurte nicht elastisch sind.

3. Wagen nach einem der Ansprüche 1 bis 2, **dadurch gekennzeichnet, daß** er zwei Abdeckungen (140) umfaßt, die in Bezug auf die vertikale Mittelachse des Wagens eine Symmetrie aufweisen.

4. Wagen nach einem der Ansprüche 1 bis 2, **dadurch gekennzeichnet, daß** er zwei Abdeckungen (140) umfaßt, die in Bezug auf eine Mittelebene des Wagens eine Symmetrie aufweisen.

5. Wagen nach einem der Ansprüche 1 bis 4, **dadurch gekennzeichnet, daß** jede Abdeckung (140) dauerhaft an einem Pfosten (137) einer Seitenwand (130) festgemacht ist.

6. Wagen nach einem der Ansprüche 1 bis 4, **dadurch gekennzeichnet, daß** jede Abdeckung (140) abnehmbar an ainem Pfosten (137) einer Seitenwand (130) angebracht ist.

7. Wagen nach einem der Ansprüche 1 bis 6, **dadurch gekennzeichnet, daß** jede Abdeckung (140) drei Gurte (160) umfaßt.

8. Wagen nach einem der Ansprüche 1 bis 7, **dadurch gekennzeichnet, daß** jede Abdeckung (140) folgendes umfaßt: einen oberen Gurt (162), der sich in der Nähe des oberen horizontalen Rands der Folie (150) befindet, einen mittleren Gurt (164), der sich bevorzugt im wesentlichen auf halber Höhe der Folie (150) befindet, und einen unteren Gurt (166), der sich am unteren Rand der Folie (150) befindet.

9. Wagen nach einem der Ansprüche 1 bis 8, **dadurch gekennzeichnet, daß** die Folie (150) auf der Basis von Kunststoffmateriel gebildet ist.

10. Wagen nach einem der Ansprüche 1 bis 9, **dadurch gekennzeichnet, daß** die Folie (150) auf der Basis von Polyethylen gebildet ist.

11. Wagen nach einem der Ansprüche 1 bis 10, **dadurch gekennzeichnet, daß** jeder Gurt (160) aus einem Material auf Kunststoffbasis realisiert ist.

12. Wagen nach einem der Ansprüche 1 bis 11, **dadurch gekennzeichnet, daß** jeder Gurt (160) aus Polypropylen realisiert ist.

13. Wagen nach einem der Ansprüche 1 bis 12, **dadurch gekennzeichnet, daß** jeder Gurt (160) aus der Folie (150) vernäht ist.

14. Wagen nach einem der Ansprüche 1 bis 13, **dadurch gekennzeichnet, daß** ein Ende (162) jedes Gurts (160) um einen Seitenpfosten einer Seitenwand (130) herum in einer Schlaufe auf sich selber umgeschlagen und in diesem Zustand befestigt ist.

15. Wagen nach einem der Ansprüche 1 bis 14, **dadurch gekennzeichnet, daß** ein Ende (162) jedes Gurts (160) mit einem Haken (170) ausgestattet ist, der dafür eingerichtet ist, an einem ausgewählten Pfosten einer Seitenwand (130) eingehakt zu werden.

16. Wagen nach einem der Ansprüche 1 bis 15, **dadurch gekennzeichnet, daß** ein Ende (162) jedes Gurts (160) ausgestattet ist mit einem Haken (170), der dafür eingerichtet ist, an einem ausgewählten Pfosten einer Seitenwand (130) eingehakt zu werden, und mit einem Verriegelungsmittel versehen ist.

17. Wagen nach einem der Ansprüche 1 bis 16, **dadurch gekennzeichnet, daß** jeder Gurt (160) mit einem Mittel (180) zum Einstellen der Länge ausgestattet ist.

18. Wagen nach einem der Ansprüche 1 bis 17, **dadurch gekennzeichnet, daß** die horizontale Breite jeder Wand (150) größer ist als der zwischen zwei Seitenwänden (130) des Wagens vorhandene Abstand.

19. Wagen nach einem der Ansprüche 1 bis 18, **dadurch gekennzeichnet, daß** eine Abdeckung (150) mit einem Etikettenträger ausgestattet ist.

20. Wagen nach einem der Ansprüche 1 bis 19, **dadurch gekennzeichnet, daß** jeder Gurt (160) ainen Abschnitt (169) mit kontrollierten elastischen Eigenschaften umfaßt.

21. Wagen nach Ansprüche 20, **dadurch gekennzeichnet, daß** der Abschnitt (169) mit kontrollierten elastischen Eigenschaften in der Nähe eines Hakens (170) angeordnet ist.

22. Wagen nach einem Ansprüche 20 oder 21, **dadurch gekennzeichnet, daß** der Abschnitt (169) mit kontrollierten elastischen Eigenschaften aus einem elastische Abschnitt gebildet ist, der in Reihe zwischen zwei starren Abschnitten jedes Gurts (160) eingefügt ist.

23. Wagen nach einem Ansprüche 20 bis 22, **dadurch gekennzeichnet, daß** der Abschnitt mit elastischen Eigenschaften durch Aufnähen auf einen Faden eines Gurts aus starrem Material gebildet ist.

24. Wagen nach einem Ansprüche 20 bis 23, **dadurch gekennzeichnet, daß** der Abschnitt (169) mit elastischen Eigenschaften dafür eingerichtet ist, eine Dehnung zwischen 0,5 cm und 5 cm zu gestatten.

25. Wagen nach einem Ansprüche 20 bis 24, **dadurch gekennzeichnet, daß** der Abschnitt (169) mit elastischen Eigenschaften dafür eingerichtet ist, eine Dehnung zwischen 1 cm und 2 cm zu gestatten.

26. Wagen nach einem Ansprüche 20 bis 25, **dadurch gekennzeichnet, daß** jede Abdeckung gegen das Herausfallen (140) wenigstens eine Schlaufe oder ein gleichwertiges Mittel (142) umfaßt, die dafür vorgesehen ist, zeitweilig einen Befestigungshaken aufzunehmen.

27. Wagen nach Ansprüche 26, **dadurch gekennzeichnet, daß** jede Abdeckung gegen das Herausfallen (140) zwei Schlaufen oder gleichwertige Mittel (142) aufweist.

28. Wagen nach einem der Ansprüche 26 oder 27, **dadurch gekennzeichnet, daß** jede Abdeckung gegen das Herausfallen (140) eine Schlaufe (142a) im oberen Abschnitt und eine Schlaufe (142b) auf im wesentlichen halber Höhe umfaßt.

29. Wagen nach einem der Ansprüche 1 bis 28, **dadurch gekennzeichnet, daß** jede Abdeckung (140) einen allgemein rechteckigen Umriß hat, der auf seinen vertikalen Kanten mit Vorsprüngen (172) versehen ist.

30. Wagen nach Anspruch 29, **dadurch gekennzeichnet, daß** die Vorsprünge (172), die auf wenigstens einer der Seiten der Abdeckung vorgesehen sind, für eine dauerhafte Befestigung eingerichtet sind.

31. Wagen nach einem der Ansprüche 29 oder 30, **dadurch gekennzeichnet, daß** die Vorsprünge (172), die auf wenigstens einer der Seiten der Abdeckung vorgesehen sind, für eine abnehmbare Befestigung eingerichtet sind.

32. Wagen nach Anspruch 31, **dadurch gekennzeichnet, daß** die abnehmbaren Befestigungsmittel Befestigungsmittel vom Typ der Klettverschlußbänder sind, beispielsweise in der Kombination Velours/Haken.

33. Wagen nach einem der Ansprüche 1 bis 32, **dadurch gekennzeichnet, daß** jede Abdeckung (140) mit einem einzigen Gurt versehen ist, der mit einem Haken (170) ausgestattet ist.

34. Wagen nach Anspruch 33, **dadurch gekennzeichnet, daß** der Gurt (140) auf halber Höhe der biegsamen Folie vorgesehen ist, die die Abdeckung bildet.

35. Abdeckung gemäß den in einem der Ansprüche 1 bis 34 definierten Mitteln, die aus einer biegsamen Folie (150) gebildet ist, mit Abmessungen, die dafür eingerichtet sind, wenigstens eine zwischen zwei Seitenwänden (130) definierte Seite des Wagens abzudecken, und die auf sich selbst befestigt wenigstens zwei horizontale Gurte (160) umfaßt, die an einem ersten Ende mit Mitteln (167) ausgestattet sind, die dafür geeignet sind, die Befestigung der Abdeckung an einem Pfosten einer ersten Seitenwand zu gestatten, und an ihrem zweiten Ende mit Mitteln (170) ausgestattet sind, die eine abnehmbare Befestigung der Abdeckung an einem Pfosten der gegenüberliegenden Seitenwand gestatten.
